# EUROPÄISCHE PATENTSCHRIFT

(11) **EP 1 163 833 B1**
(45) Veröffentlichungstag und Bekanntmachung des Hinweises auf die Patenterteilung: **16.02.2005**
(21) Anmeldenummer: 01114058.9
(22) Anmeldetag: 08.06.2001
(51) Int. Cl.: A01F 7/06

(54) **Axialtrennvorrichtung mit einer dem Auslassabschnitt zugeordneten Leiteinrichtung**
Axial flow separator with a guiding device at the outlet
Dispositif séparateur à écoulement axial muni d'un dispositif de guidage à la sortie

(30) Priorität: 15.06.2000 US 594992
(43) Veröffentlichungstag der Anmeldung: 19.12.2001
(73) Patentinhaber: DEERE & COMPANY, Moline, Illinois 61265-8098 (US)
(72) Erfinder: Payne, Jeffrey Ray, Moline, IL 61265 (US); Gerber, Merle Ray, Moline,IL 61265 (US)
(74) Vertreter: Holst, Sönke, Dr.

(56) Entgegenhaltungen:
- EP-A- 1 031 270
- GB-A- 2 032 748

## Beschreibung

### Beschreibung für folgende Vertragsstaaten : DE, DK, FR, IT

Die Erfindung betrifft eine Axialtrennvorrichtung für einen Axialmähdrescher, mit einem Rotor, der im Erntebetrieb in einer Drehrichtung in Drehung versetzbar ist und einen Auslassabschnitt zum Auslassen von Erntegut aufweist, und mit einer dem Auslassabschnitt zugeordneten Leiteinrichtung zum Führen des vom Rotor ausgelassenen Ernteguts, die eine erste Leitkante, die der im Erntebetrieb nach unten drehenden Seite des Rotors benachbart ist, und eine zweite Leitkante aufweist, die der im Erntebetrieb nach oben drehenden Seite des Rotors benachbart ist und unterhalb der Drehachse des Rotors auf die erste Leitkante trifft, wobei die Leiteinrichtung unsymmetrisch ist, sich die erste Leitkante von einem unteren mittleren Totpunkt unterhalb der Drehachse des Rotors über ihre Länge nach außen kontinuierlich weiter nach hinten schließt, und die erste Leitkante eine größere Öffnung bereitstellt als die zweite Leitkante.

Landwirtschaftliche Mähdrescher sind große Maschinen, die landwirtschaftliches Gut ernten, dreschen, trennen und reinigen. Das dabei gewonnene gereinigte Korn wird in einem am Mähdrescher angeordneten Korntank gespeichert. Das gereinigte Korn kann dann durch einen Entladeschneckenförderer auf einen Lastwagen, Anhänger oder in ein anderes Aufnahmegefäß verbracht werden.

Axialmähdrescher haben eine oder zwei große rotorförmige axiale Gutbearbeitungseinheiten, die entlang der Längsachse des Mähdreschers angeordnet sind, um das geerntete Gut zu dreschen und zu trennen. Diese axialen Gutbearbeitungseinheiten sind mit einem Beschickungsabschnitt zur Aufnahme geernteten Guts, einem Dreschabschnitt zum Dreschen des vom Beschickungsabschnitt erhaltenen Guts, einem Trennabschnitt zum Freisetzen von Korn, das im gedroschenen, vom Dreschabschnitt erhaltenen Material noch enthalten ist, und einem Auslassabschnitt zum Austragen des von Korn befreiten Guts aus der axialen Gutbearbeitungseinheit ausgestattet.

Das geerntete Gut wird dem Beschickungsabschnitt durch einen Schrägförderer zugeführt. Das Gut ist in einer Gutmatte angeordnet, die die Beschickungselemente des Rotors der Gutbearbeitungseinheit aufnehmen und in einen wendelförmigen Fluss verbringen, d. h. in Rotation versetzen müssen. Der wendelförmige Fluss des Ernteguts bewegt sich vom Beschickungsabschnitt zum Dreschabschnitt und dann zum Trennabschnitt. Durch die axialen Gutbearbeitungseinheiten wird Korn gemeinsam mit im Gut enthaltener Spreu abgetrennt, indem es durch am Boden der Gutbearbeitungseinheit angeordnete Roste fällt. Das Gut außer dem Korn, wie beispielsweise Stroh, tritt aus dem Trennabschnitt in den Auslassabschnitt der Gutbearbeitungseinheiten ein. Der Auslassabschnitt stößt das von Korn verschiedene Gut dann an der Rückseite des Mähdreschers aus oder führt dieses Gut einem an der Rückseite des Mähdreschers angeordneten Strohhäcksler zu.

Es ist wichtig, das von Korn verschiedene Gut an der Rückseite des Mähdreschers in einem in Querrichtung gleichförmigen Schwad zu verteilen, um den Erdboden mit den darauf liegenden Gutresten besser bewirtschaften zu können. Gegenwärtige Axialmähderscher verwenden spezielle Ausstoßelemente am Rotor der Gutbearbeitungseinheit, um das Gut einer quer angeordneten Auswurftrommel zuzuführen. Für diesen Typ einer Austraganordnung ist es schwierig, für eine große Vielzahl unterschiedlicher Erntegüter und Erntegutbedingungen sowohl exzellente Materialaustrageigenschaften als auch exzellente Querverteilungen zu erzielen. In der Regel hat der Mähdrescher exzellente Materialaustrageigenschaften und eine dürftige Querverteilung oder umgekehrt

In der GB 2 032 748 A wird ein Axialmähdrescher eingangs genannter Art beschrieben. Der Rotor ist von einem Gehäuse umgeben, das im Auslassbereich nach unten ausgeschnitten ist. Unterhalb der Seite des Rotors, die sich im Betrieb nach oben dreht, ist eine Abschneidkante angeordnet, die sich axial entlang des Umfangs des Rotors erstreckt, d. h. genau in Längsrichtung des Mähdreschers. Unterhalb der Seite des Rotors, die sich im Betrieb nach unten dreht, befinden sich ausgeschnittene Bereiche, deren vordere Kante sich in der Drehrichtung des Rotors kontinuierlich oder in Stufen weiter nach vorn verlagert. Der Auslass erweitert sich in Drehrichtung des Rotors somit nach und nach und schließt sich dann wieder an der Abschneidkante. Dadurch soll ein gleichmäßiges Abwurfverhalten erzielt werden. Da die Abschneidkante sich aber in axialer Richtung des Rotors erstreckt, endet der Gutfluss an der nach oben drehenden Seite des Rotors stufenartig und somit ungleichmäßig.

In der nachveröffentlichten EP 1 031 270 A wird eine Axialtrennvorrichtung vorgeschlagen, bei der sich die rückwärtige Leitkante des Gehäuses an der sich im Erntebetrieb nach oben drehenden Seite des Rotors vom unteren Totpunkt unterhalb der Drehachse des Rotors kontinuierlich nach hinten verlagert. Es werden in der Drehrichtung des Rotors somit umso weniger Erntegutreste abgegeben, je weiter sich der Rotor nach oben gedreht hat. Die Leitkante an der sich nach unten drehenden Seite des Rotors erstreckt sich quer zur Drehachse des Rotors. Ihr schließt sich eine Einlageplatte an, deren rückwärtige Kante sich schräg nach hinten und außen erstreckt.

Die der Erfindung zugrunde liegende Aufgabe wird darin gesehen, eine Austraganordnung bereitzustellen, die über einen großen Bereich an Erntegütern und Erntegutbedingungen sowohl sehr gute Materialaustrageigenschaften als auch eine sehr gute Querverteilung aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Im Auslassabschnitt endet das Gehäuse der Axialtrennvorrichtung in einer Leiteinrichtung. Diese Leiteinrichtung hat eine nach unten gekehrte erste Leitkante und eine nach oben gekehrte zweite Leitkante, wie sie durch die Drehung des Rotors der Axialtrennvorrichtung definiert werden. Die nach unten gewandte Leitkante und die nach oben gewandte Leitkante vereinigen sich an einem unteren mittleren Totpunkt der Leiteinrichtung, welcher unterhalb der Drehachse des Rotors angeordnet ist. Die erste und zweite Leitkante sind derart unsymmetrisch gestaltet, dass die erste Leitkante in Achsrichtung des Rotors weiter geöffnet (also weiter vorn angeordnet) ist als die zweite Leitkante. Somit ist der nach unten gekehrten Seite des Rotors ein größerer freier - d. h. nicht vom Leitelement überdeckter - Querschnitt des Schachts zugeordnet, in dem das Gut nach unten/hinten abströmt. An der ersten Leitkante kann das Gut leichter vorbeiströmen als an der zweiten Leitkante. Die der nach unten gekehrten Seite des Rotors zugeordnete erste Leitkante öffnet sich über die Längserstreckung des Leitelements bis zum unteren mittleren Totpunkt des Leitelements kontinuierlich, d. h. ist in Achsrichtung des Rotors immer weiter vorn angeordnet, je näher sie dem Totpunkt ist. Die der nach oben gekehrten Seite des Rotors benachbarte, zweite Leitkante schließt sich über ihre Längserstreckung vom unteren mittleren Totpunkt des Leitelements nach außen und oben kontinuierlich, d. h. sie ist immer weiter hinten angeordnet.

Auf diese Weise vermeidet man das im Stand der Technik anzutreffende unsymmetrische Auswerfen des Guts, das durch ein Bestreben des Rotors bedingt ist, das Erntegut mitzuführen und an der nach oben gekehrten Seite auszuwerfen. Die unsymmetrische Anordnung der Leitkanten des Leitelements bevorzugt ein Auswerfen an der nach unten gekehrten Seite und bewirkt ein symmetrisches Auswerfen des Guts.

Um das Zerreißen des wendelförmigen Flusses des von Korn befreiten Ernteguts im Auslassabschnitt zu minimieren, sind in einer vorteilhaften Ausführungsform die am Rotor befestigten Guteingriffselemente im Auslassabschnitt und im Trennabschnitt gleichartig. Dadurch wird der wendelförmige Fluss des Ernteguts gleichförmiger.

Insbesondere bietet es sich an, dass die nach unten gekehrte Leitkante sich mit einer langsameren Rate öffnet als sich die nach oben gekehrte Leitkante schließt. Es wird vorgeschlagen, unmittelbar unterhalb der Leiteinrichtung einen Austragschacht anzuordnen, um das den vom Korn befreiten Fluss des Ernteguts einer quer angeordneten Auswurftrommel zuzuführen. Die quer angeordnete Auswurftrommel stößt das Erntegut an der Rückseite des Mähdreschers direkt aus oder führt es direkt einem Strohhäcksler zu. Dabei ragt die Leiteinrichtung in den Austragschacht hinein.

Der Austragschacht kann mit einem geneigten Boden, einer nach unten gekehrten Seitenwand und einer nach oben gekehrten Seitenwand ausgestattet sein. Die nach unten gekehrte Seitenwand kann mit einer stromauf angeordneten Wand und einer stromab angeordneten Wand versehen sein. Die stromauf erstreckende Wand erstreckt sich vorzugsweise vom unteren mittleren Totpunkt der Leiteinrichtung bis zur stromab angeordneten Platte. Sowohl die stromauf als auch die stromab angeordnete Platte können sich nach hinten und quer zur Vorwärtsrichtung erstrecken, wobei die stromab angeordnete Platte sich zu einem größeren Grad nach hinten erstreckt als die stromauf angeordnete Platte. Die nach oben gekehrte Seitenwand erstreckt sich ebenfalls vom unteren mittleren Totpunkt quer und nach hinten.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers mit einer axial angeordneten Gutbearbeitungseinheit mit einem Rotor,
- Fig. 2: eine rückwärtige perspektivische Ansicht des Auslassabschnitts der axialen Gutbearbeitungseinheit,
- Fig. 3: eine Draufsicht auf die Leiteinrichtung und den Austragschacht, und
- Fig. 4: eine rückseitige Ansicht der Leiteinrichtung und des Austragsschachts.

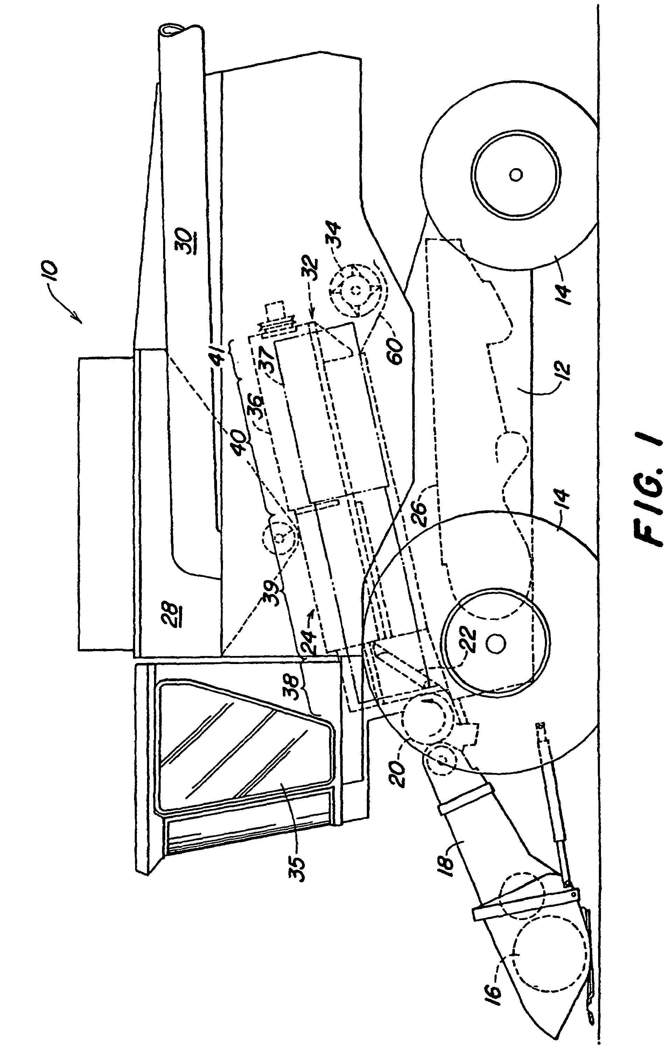

Figur 1 zeigt einen landwirtschaftlichen Mähdrescher 10 mit einem Chassis 12 und sich von diesem erstreckenden Bodenlaufrädern 14. Obwohl der Mähdrescher 10 mit Rädern 14 dargestellt ist, könnte er auch mit zwei oder vier Raupenketten ausgestattet sein. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter. Im Folgenden beziehen sich alle Richtungsangaben (wie vorn, hinten, quer) auf die Vorwärtsfahrtrichtung des Mähdreschers 10.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 auf einen Anhänger oder Lastwagen entladen werden.

Gedroschenes, vom Korn befreites Stroh wird aus der Axialtrennvorrichtung 24 durch einen Auslass 32 zu einer Abgabetrommel 34 herausgeführt. Die Abgabetrommel 34 wirft wiederum das Stroh am rückwärtigen Ende des Mähdreschers 10 aus. Es ist anzumerken, dass die Abgabetrommel 34 das von Korn befreite Erntegut auch direkt einem Strohhäcksler zuführen könnte. Die Bedienung des Mähdreschers 10 erfolgt von einer Fahrerkabine 35 aus.

Die Axialtrennvorrichtung 24 umfasst ein zylindrisches Rotorgehäuse 36 und einen im Rotorgehäuse 36 angeordneten Rotor 37. Die in Vorwärtsfahrtrichtung vorderen Teile des Rotors 37 und des Rotorgehäuses 36 definieren den Beschickungsabschnitt 38 der Axialtrennvorrichtung 24. In Längsrichtung des Rotors 37 stromabwärts des Beschickungsabschnitts 38 befindet sich ein Dreschabschnitt 39, ein Trennabschnitt 40, und ein Auslassabschnitt 41. Der Rotor 37 ist im Beschickungsabschnitt 38 mit einer konischen Rotortrommel mit spiralwendelförmigen Beschickungselementen zum Erfassen von Erntegut, das von der Leittrommel 20 und dem Einlassübergangsbereich 22 aufgenommen wird, ausgestattet. Unmittelbar stromabwärts des Beschickungsabschnitts 38 ist der Dreschabschnitt 39 der Axialtrennvorrichtung 24. Im Dreschabschnitt 39 umfasst der Rotor 37 eine zylindrische Rotortrommel 49 mit einer Anzahl an Dreschelementen, um das Erntegut zu dreschen, das vom Beschickungsabschnitt 38 empfangen wird. Stromabwärts des Dreschabschnitts 39 ist der Trennabschnitt 40, in dem das im Erntegut gefangene Korn freigesetzt wird und durch ein bodenseitiges Rost in das Reinigungssystem 26 fällt. Der Trennabschnitt 40 geht in einen Auslassabschnitt 41 über, wo Erntegut, das kein Korn enthält, aus der Axialtrennvorrichtung 24 ausgeworfen wird.

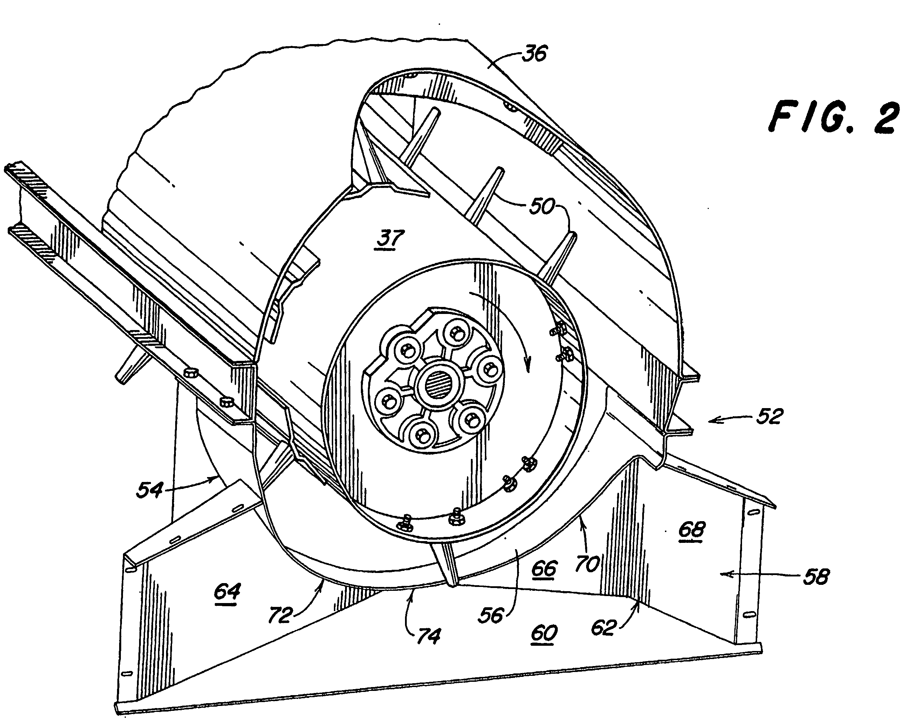

Der Auslassabschnitt 41 der Axialtrennvorrichtung 24 ist in Figur 2 am besten dargestellt. Der im Trennabschnitt 40 und im Auslassabschnitt 41 angeordnete Bereich des Rotors 37 ist mit Guteingriffselementen 50 ausgestattet. Dieser Abschnitt des Rotors 37 und die Anordnung der Guteingriffselemente 50 ist im Trennabschnitt 40 und im Auslassabschnitt 41 gleich, um ein Zerreißen des wendelförmigen Flusses des von Korn befreiten Ernteguts zu minimieren. Betrachtet man Figur 2, dreht sich der Rotor 37 im Uhrzeigersinn, so dass die rechte Seite des Rotorgehäuses 36 die nach unten gekehrte Seite 52 und die linke Seite des Rotorgehäuses 36 die nach oben gekehrte Seite 54 ist.

Der Auslassabschnitt 41 ist mit einer Leiteinrichtung 56 versehen, die der Krümmung des Rotors 37 angepasst und oberhalb eines Austragschachts 58 vorspringend (in ihn hineinragend) angeordnet ist. Der Austragschacht 58 ist mit einem geneigten Boden 60, einer der nach unten gekehrten Seite 52 des Rotors 37 zugeordneten Seitenwand 62 und einer der nach oben gekehrten Seite 54 des Rotors 37 zugewandten Seitenwand 64 ausgestattet. Der geneigte Boden 60 erstreckt sich nach unten und führt der quer angeordneten Abgabetrommel 34 Erntegut zu. Die der nach unten gekehrten Seite 52 des Rotors 37 zugeordnete Wand 62 weist zwei Platten auf, eine stromauf angeordnete Platte 66 und eine stromab angeordnete Platte 68. Die Platten 66 und 68 schließen einen Winkel ein.

Die vorspringende Leiteinrichtung 56 hat eine der nach unten gekehrten Seite 52 des Rotors 37 benachbarte, erste Leitkante 70 und eine der nach oben gekehrten Seite 54 des Rotors 37 benachbarte, zweite Leitkante 72, die am unteren mittleren Totpunkt 74 der Leiteinrichtung 56 aufeinander treffen. Die Leiteinrichtung 56 hat eine einzigartige asymmetrische Form. Im Einzelnen ist die der nach unten gekehrten Seite 52 des Rotors 37 zugeordnete Leitkante 70 weiter geöffnet und öffnet sich immer weiter (d. h. sie ist immer weiter vorn angeordnet), je näher sie am unteren mittleren Totpunkt 74 der Leiteinrichtung ist. Die der nach oben gekehrten Seite 54 des Rotors 37 zugeordnete Leitkante 72 schließt sich vom unteren mittleren Totpunkt 74 der Leiteinrichtung 56 in Richtung nach oben und außen zunehmend, d. h. sie ist sukzessive weiter hinten angeordnet. Die der nach unten gekehrten Seite 52 des Rotors 37 zugeordnete Leitkante 70 öffnet sich (bis auf den Abschnitt, der kurz vor ihrem äußeren und oberen Ende liegt) mit einer langsameren Rate (d. h. geringeren Steigung) als sich die der nach oben gekehrten Seite 54 des Rotors 37 zugeordnete Leitkante 72 schließt, was die Leiteinrichtung 56 unsymmetrisch macht.

Diese einzigartige asymmetrische Leiteinrichtung 56 verteilt das von Korn befreite Gut gleichmäßiger über die Breite der quer angeordneten Abgabetrommel 34. Es gibt ein Bestreben des Rotors 37, das Gut mitzuführen und einen Hauptanteil des Guts in die nach oben gekehrte Seite 64 des Austragschachts 58 auszuwerfen. Um dieses Konzentrationsbestreben zu vermeiden, öffnet sich die der nach unten gekehrten Seite 52 des Rotors 37 zugeordnete Leitkante 70 der Leiteinrichtung 56 schnell (in ihrer Längsrichtung von außen nach innen betrachtet), um das Ausstoßen des Guts in die nach unten gekehrte Seite des Austragschachts 58 zu begünstigen. Die der nach unten gekehrten Seite 52 zugeordnete Leitkante 70 der Leiteinrichtung 58 öffnet sich langsam und kontinuierlich, bis sie den unteren mittleren Totpunkt 74 der Leiteinrichtung 56 erreicht. Die Leiteinrichtung 58 schließt sich im Bereich der der nach oben gekehrten Seite 54 zugeordneten Leitkante 72 schneller als im Bereich der der nach unten gekehrten Seite 52 zugeordneten Leitkante 70, so dass der Fluss des Ernteguts zur nach oben gekehrten Seite des Austragschachts 58 geführt wird. Das Gut, das an der Leitkante 72 vorbeigeführt wird, die der nach oben gekehrten Seite 54 zugeordnet ist, wird vom Rotor 37 herumgetragen und an der nach unten gekehrten Seite des Austragschachts 58 ausgeworfen.

Der Verweis auf den unteren mittleren Totpunkt 74 der Leiteinrichtung 58 bezieht sich hier auf einen generellen Bereich und nicht einen spezifischen Punkt.

### Beschreibung für folgenden Vertragsstaat : GB

Die Erfindung betrifft eine Axialtrennvorrichtung für einen Axialmähdrescher, mit einem Rotor, der im Erntebetrieb in einer Drehrichtung in Drehung versetzbar ist und einen Auslassabschnitt zum Auslassen von Erntegut aufweist, und mit einer dem Auslassabschnitt zugeordneten Leiteinrichtung zum Führen des vom Rotor ausgelassenen Ernteguts, die eine erste Leitkante, die der im Erntebetrieb nach unten drehenden Seite des Rotors benachbart ist, und eine zweite Leitkante aufweist, die der im Erntebetrieb nach oben drehenden Seite des Rotors benachbart ist und unterhalb der Drehachse des Rotors auf die erste Leitkante trifft, wobei die Leiteinrichtung unsymmetrisch ist und die erste Leitkante eine größere Öffnung bereitstellt als die zweite Leitkante.

Landwirtschaftliche Mähdrescher sind große Maschinen, die landwirtschaftliches Gut ernten, dreschen, trennen und reinigen. Das dabei gewonnene gereinigte Korn wird in einem am Mähdrescher angeordneten Korntank gespeichert. Das gereinigte Korn kann dann durch einen Entladeschneckenförderer auf einen Lastwagen, Anhänger oder in ein anderes Aufnahmegefäß verbracht werden.

Axialmähdrescher haben eine oder zwei große rotorförmige axiale Gutbearbeitungseinheiten, die entlang der Längsachse des Mähdreschers angeordnet sind, um das geerntete Gut zu dreschen und zu trennen. Diese axialen Gutbearbeitungseinheiten sind mit einem Beschickungsabschnitt zur Aufnahme geernteten Guts, einem Dreschabschnitt zum Dreschen des vom Beschickungsabschnitt erhaltenen Guts, einem Trennabschnitt zum Freisetzen von Korn, das im gedroschenen, vom Dreschabschnitt erhaltenen Material noch enthalten ist, und einem Auslassabschnitt zum Austragen des von Korn befreiten Guts aus der axialen Gutbearbeitungseinheit ausgestattet.

Das geerntete Gut wird dem Beschickungsabschnitt durch einen Schrägförderer zugeführt. Das Gut ist in einer Gutmatte angeordnet, die die Beschickungselemente des Rotors der Gutbearbeitungseinheit aufnehmen und in einen wendelförmigen Fluss verbringen, d. h. in Rotation versetzen müssen. Der wendelförmige Fluss des Ernteguts bewegt sich vom Beschickungsabschnitt zum Dreschabschnitt und dann zum Trennabschnitt. Durch die axialen Gutbearbeitungseinheiten wird Korn gemeinsam mit im Gut enthaltener Spreu abgetrennt, indem es durch am Boden der Gutbearbeitungseinheit angeordnete Roste fällt. Das Gut außer dem Korn, wie beispielsweise Stroh, tritt aus dem Trennabschnitt in den Auslassabschnitt der Gutbearbeitungseinheiten ein. Der Auslassabschnitt stößt das von Korn verschiedene Gut dann an der Rückseite des Mähdreschers aus oder führt dieses Gut einem an der Rückseite des Mähdreschers angeordneten Strohhäcksler zu.

Es ist wichtig, das von Korn verschiedene Gut an der Rückseite des Mähdreschers in einem in Querrichtung gleichförmigen Schwad zu verteilen, um den Erdboden mit den darauf liegenden Gutresten besser bewirtschaften zu können. Gegenwärtige Axialmähderscher verwenden spezielle Ausstoßelemente am Rotor der Gutbearbeitungseinheit, um das Gut einer quer angeordneten Auswurftrommel zuzuführen. Für diesen Typ einer Austraganordnung ist es schwierig, für eine große Vielzahl unterschiedlicher Erntegüter und Erntegutbedingungen sowohl exzellente Materialaustrageigenschaften als auch exzellente Querverteilungen zu erzielen. In der Regel hat der Mähdrescher exzellente Materialaustrageigenschaften und eine dürftige Querverteilung oder umgekehrt.

In der GB 2 032 748 A wird ein Axialmähdrescher eingangs genannter Art beschrieben. Der Rotor ist von einem Gehäuse umgeben, das im Auslassbereich nach unten ausgeschnitten ist. Unterhalb der Seite des Rotors, die sich im Betrieb nach oben dreht, ist eine Abschneidkante angeordnet, die sich axial entlang des Umfangs des Rotors erstreckt, d. h. genau in Längsrichtung des Mähdreschers. Unterhalb der Seite des Rotors, die sich im Betrieb nach unten dreht, befinden sich ausgeschnittene Bereiche, deren vordere Kante sich in der Drehrichtung des Rotors kontinuierlich oder in Stufen weiter nach vorn verlagert. Der Auslass erweitert sich in Drehrichtung des Rotors somit nach und nach und schließt sich dann wieder an der Abschneidkante. Dadurch soll ein gleichmäßiges Abwurfverhalten erzielt werden. Da die Abschneidkante sich aber in axialer Richtung des Rotors erstreckt, endet der Gutfluss an der nach oben drehenden Seite des Rotors stufenartig und somit ungleichmäßig.

In der nachveröffentlichten EP 1031 270 A, in der GB nicht benannt ist, wird eine Axialtrennvorrichtung vorgeschlagen, bei der sich die rückwärtige Leitkante des Gehäuses an der sich im Erntebetrieb nach oben drehenden Seite des Rotors vom unteren Totpunkt unterhalb der Drehachse des Rotors kontinuierlich nach hinten verlagert. Es werden in der Drehrichtung des Rotors somit umso weniger Erntegutreste abgegeben, je weiter sich der Rotor nach oben gedreht hat. Die Leitkante an der sich nach unten drehenden Seite des Rotors erstreckt sich quer zur Drehachse des Rotors. Ihr schließt sich eine Einlageplatte an, deren rückwärtige Kante sich schräg nach hinten und außen erstreckt.

Die der Erfindung zugrunde liegende Aufgabe wird darin gesehen, eine Austraganordnung bereitzustellen, die über einen großen Bereich an Erntegütern und Erntegutbedingungen sowohl sehr gute Materialaustrageigenschaften als auch eine sehr gute Querverteilung aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Im Auslassabschnitt endet das Gehäuse der Axialtrennvorrichtung in einer Leiteinrichtung. Diese Leiteinrichtung hat eine nach unten gekehrte erste Leitkante und eine nach oben gekehrte zweite Leitkante, wie sie durch die Drehung des Rotors der Axialtrennvorrichtung definiert werden. Die nach unten gewandte Leitkante und die nach oben gewandte Leitkante vereinigen sich an einem unteren mittleren Totpunkt der Leiteinrichtung, welcher unterhalb der Drehachse des Rotors angeordnet ist. Die erste und zweite Leitkante sind derart unsymmetrisch gestaltet, dass die erste Leitkante in Achsrichtung des Rotors weiter geöffnet (also weiter vorn angeordnet) ist als die zweite Leitkante. Somit ist der nach unten gekehrten Seite des Rotors ein größerer freier - d. h. nicht vom Leitelement überdeckter - Querschnitt des Schachts zugeordnet, in dem das Gut nach unten/hinten abströmt. An der ersten Leitkante kann das Gut leichter vorbeiströmen als an der zweiten Leitkante. Die der nach oben gekehrten Seite des Rotors benachbarte, zweite Leitkante schließt sich über ihre Längserstreckung vom unteren mittleren Totpunkt des Leitelements nach außen und oben kontinuierlich, d. h. sie ist immer weiter hinten angeordnet.

Auf diese Weise vermeidet man das im Stand der Technik anzutreffende unsymmetrische Auswerfen des Guts, das durch ein Bestreben des Rotors bedingt ist, das Erntegut mitzuführen und an der nach oben gekehrten Seite auszuwerfen. Die unsymmetrische Anordnung der Leitkanten des Leitelements bevorzugt ein Auswerfen an der nach unten gekehrten Seiteund bewirkt ein symmetrisches Auswerfen des Guts.

Um das Zerreißen des wendelförmigen Flusses des von Korn befreiten Ernteguts im Auslassabschnitt zu minimieren, sind in einer vorteilhaften Ausführungsform die am Rotor befestigten Guteingriffselemente im Auslassabschnitt und im Trennabschnitt gleichartig. Dadurch wird der wendelförmige Fluss des Ernteguts gleichförmiger.

Vorzugsweise öffnet sich die der nach unten gekehrten Seite des Rotors zugeordnete erste Leitkante über die Längserstreckung des Leitelements bis zum unteren mittleren Totpunkt des Leitelements kontinuierlich, d. h. ist in Achsrichtung des Rotors immer weiter vorn angeordnet, je näher sie dem Totpunkt ist. Insbesondere bietet es sich an, dass die nach unten gekehrte Leitkante sich mit einer langsameren Rate öffnet als sich die nach oben gekehrte Leitkante schließt.

Es wird vorgeschlagen, unmittelbar unterhalb der Leiteinrichtung einen Austragschacht anzuordnen, um das den vom Korn befreiten Fluss des Ernteguts einer quer angeordneten Auswurftrommel zuzuführen. Die quer angeordnete Auswurftrommel stößt das Erntegut an der Rückseite des Mähdreschers direkt aus oder führt es direkt einem Strohhäcksler zu. Dabei ragt die Leiteinrichtung in den Austragschacht hinein.

Der Austragschacht kann mit einem geneigten Boden, einer nach unten gekehrten Seitenwand und einer nach oben gekehrten Seitenwand ausgestattet sein. Die nach unten gekehrte Seitenwand kann mit einer stromauf angeordneten Wand und einer stromab angeordneten Wand versehen sein. Die stromauf erstreckende Wand erstreckt sich vorzugsweise vom unteren mittleren Totpunkt der Leiteinrichtung bis zur stromab angeordneten Platte. Sowohl die stromauf als auch die stromab angeordnete Platte können sich nach hinten und quer zur Vorwärtsrichtung erstrecken, wobei die stromab angeordnete Platte sich zu einem größeren Grad nach hinten erstreckt als die stromauf angeordnete Platte. Die nach oben gekehrte Seitenwand erstreckt sich ebenfalls vom unteren mittleren Totpunkt quer und nach hinten.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers mit einer axial angeordneten Gutbearbeitungseinheit mit einem Rotor,
- Fig. 2: eine rückwärtige perspektivische Ansicht des Auslassabschnitts der axialen Gutbearbeitungseinheit,

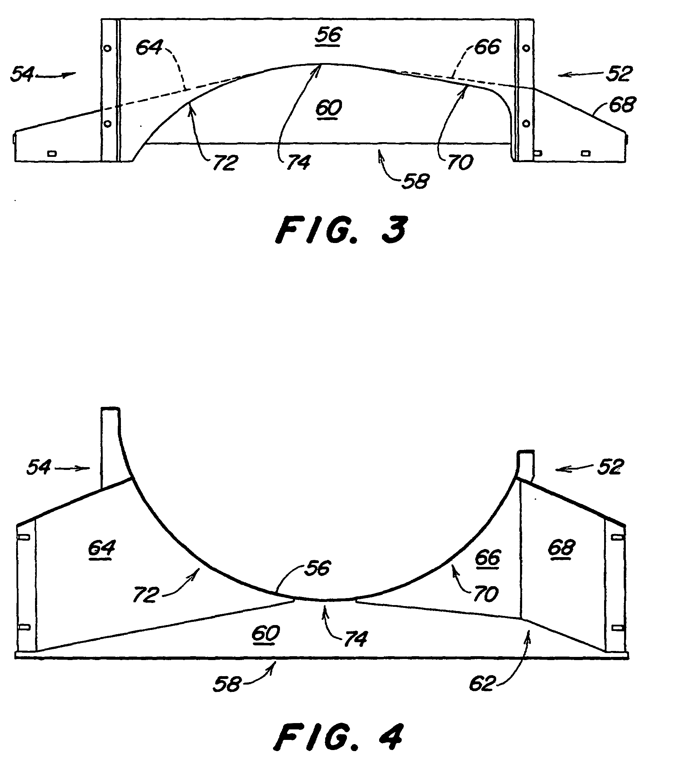

- Fig. 3: eine Draufsicht auf die Leiteinrichtung und den Austragschacht, und
- Fig. 4: eine rückseitige Ansicht der Leiteinrichtung und des Austragsschachts.

Figur 1 zeigt einen landwirtschaftlichen Mähdrescher 10 mit einem Chassis 12 und sich von diesem erstreckenden Bodenlaufrädern 14. Obwohl der Mähdrescher 10 mit Rädern 14 dargestellt ist, könnte er auch mit zwei oder vier Raupenketten ausgestattet sein. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter. Im Folgenden beziehen sich alle Richtungsangaben (wie vorn, hinten, quer) auf die Vorwärtsfahrtrichtung des Mähdreschers 10.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 auf einen Anhänger oder Lastwagen entladen werden.

Gedroschenes, vom Korn befreites Stroh wird aus der Axialtrennvorrichtung 24 durch einen Auslass 32 zu einer Abgabetrommel 34 herausgeführt. Die Abgabetrommel 34 wirft wiederum das Stroh am rückwärtigen Ende des Mähdreschers 10 aus. Es ist anzumerken, dass die Abgabetrommel 34 das von Korn befreite Erntegut auch direkt einem Strohhäcksler zuführen könnte. Die Bedienung des Mähdreschers 10 erfolgt von einer Fahrerkabine 35 aus.

Die Axialtrennvorrichtung 24 umfasst ein zylindrisches Rotorgehäuse 36 und einen im Rotorgehäuse 36 angeordneten Rotor 37. Die in Vorwärtsfahrtrichtung vorderen Teile des Rotors 37 und des Rotorgehäuses 36 definieren den Beschickungsabschnitt 38 der Axialtrennvorrichtung 24. In Längsrichtung des Rotors 37 stromabwärts des Beschickungsabschnitts 38 befindet sich ein Dreschabschnitt 39, ein Trennabschnitt 40, und ein Auslassabschnitt 41. Der Rotor 37 ist im Beschickungsabschnitt 38 mit einer konischen Rotortrommel mit spiralwendelförmigen Beschickungselementen zum Erfassen von Erntegut, das von der Leittrommel 20 und dem Einlassübergangsbereich 22 aufgenommen wird, ausgestattet. Unmittelbar stromabwärts des Beschickungsabschnitts 38 ist der Dreschabschnitt 39 der Axialtrennvorrichtung 24. Im Dreschabschnitt 39 umfasst der Rotor 37 eine zylindrische Rotortrommel 49 mit einer Anzahl an Dreschelementen, um das Erntegut zu dreschen, das vom Beschickungsabschnitt 38 empfangen wird. Stromabwärts des Dreschabschnitts 39 ist der Trennabschnitt 40, in dem das im Erntegut gefangene Korn freigesetzt wird und durch ein bodenseitiges Rost in das Reinigungssystem 26 fällt. Der Trennabschnitt 40 geht in einen Auslassabschnitt 41 über, wo Erntegut, das kein Korn enthält, aus der Axialtrennvorrichtung 24 ausgeworfen wird.

Der Auslassabschnitt 41 der Axialtrennvorrichtung 24 ist in Figur 2 am besten dargestellt. Der im Trennabschnitt 40 und im Auslassabschnitt 41 angeordnete Bereich des Rotors 37 ist mit Guteingriffselementen 50 ausgestattet. Dieser Abschnitt des Rotors 37 und die Anordnung der Guteingriffselemente 50 ist im Trennabschnitt 40 und im Auslassabschnitt 41 gleich, um ein Zerreißen des wendelförmigen Flusses des von Korn befreiten Ernteguts zu minimieren. Betrachtet man Figur 2, dreht sich der Rotor 37 im Uhrzeigersinn, so dass die rechte Seite des Rotorgehäuses 36 die nach unten gekehrte Seite 52 und die linke Seite des Rotorgehäuses 36 die nach oben gekehrte Seite 54 ist.

Der Auslassabschnitt 41 ist mit einer Leiteinrichtung 56 versehen, die der Krümmung des Rotors 37 angepasst und oberhalb eines Austragschachts 58 vorspringend (in ihn hineinragend) angeordnet ist. Der Austragschacht 58 ist mit einem geneigten Boden 60, einer der nach unten gekehrten Seite 52 des Rotors 37 zugeordneten Seitenwand 62 und einer der nach oben gekehrten Seite 54 des Rotors 37 zugewandten Seitenwand 64 ausgestattet. Der geneigte Boden 60 erstreckt sich nach unten und führt der quer angeordneten Abgabetrommel 34 Erntegut zu. Die der nach unten gekehrten Seite 52 des Rotors 37 zugeordnete Wand 62 weist zwei Platten auf, eine stromauf angeordnete Platte 66 und eine stromab angeordnete Platte 68. Die Platten 66 und 68 schließen einen Winkel ein.

Die vorspringende Leiteinrichtung 56 hat eine der nach unten gekehrten Seite 52 des Rotors 37 benachbarte, erste Leitkante 70 und eine der nach oben gekehrten Seite 54 des Rotors 37 benachbarte, zweite Leitkante 72, die am unteren mittleren Totpunkt 74 der Leiteinrichtung 56 aufeinander treffen. Die Leiteinrichtung 56 hat eine einzigartige asymmetrische Form. Im Einzelnen ist die der nach unten gekehrten Seite 52 des Rotors 37 zugeordnete Leitkante 70 weiter geöffnet und öffnet sich immer weiter (d. h. sie ist immer weiter vorn angeordnet), je näher sie am unteren mittleren Totpunkt 74 der Leiteinrichtung ist. Die der nach oben gekehrten Seite 54 des Rotors 37 zugeordnete Leitkante 72 schließt sich vom unteren mittleren Totpunkt 74 der Leiteinrichtung 56 in Richtung nach oben und außen zunehmend, d. h. sie ist sukzessive weiter hinten angeordnet. Die der nach unten gekehrten Seite 52 des Rotors 37 zugeordnete Leitkante 70 öffnet sich (bis auf den Abschnitt, der kurz vor ihrem äußeren und oberen Ende liegt) mit einer langsameren Rate (d. h. geringeren Steigung) als sich die der nach oben gekehrten Seite 54 des Rotors 37 zugeordnete Leitkante 72 schließt, was die Leiteinrichtung 56 unsymmetrisch macht.

Diese einzigartige asymmetrische Leiteinrichtung 56 verteilt das von Korn befreite Gut gleichmäßiger über die Breite der quer angeordneten Abgabetrommel 34. Es gibt ein Bestreben des Rotors 37, das Gut mitzuführen und einen Hauptanteil des Guts in die nach oben gekehrte Seite 64 des Austragschachts 58 auszuwerfen. Um dieses Konzentrationsbestreben zu vermeiden, öffnet sich die der nach unten gekehrten Seite 52 des Rotors 37 zugeordnete Leitkante 70 der Leiteinrichtung 56 schnell (in ihrer Längsrichtung von außen nach innen betrachtet), um das Ausstoßen des Guts in die nach unten gekehrte Seite des Austragschachts 58 zu begünstigen. Die der nach unten gekehrten Seite 52 zugeordnete Leitkante 70 der Leiteinrichtung 58 öffnet sich langsam und kontinuierlich, bis sie den unteren mittleren Totpunkt 74 der Leiteinrichtung 56 erreicht. Die Leiteinrichtung 58 schließt sich im Bereich der der nach oben gekehrten Seite 54 zugeordneten Leitkante 72 schneller als im Bereich der der nach unten gekehrten Seite 52 zugeordneten Leitkante 70, so dass der Fluss des Ernteguts zur nach oben gekehrten Seite des Austragschachts 58 geführt wird. Das Gut, das an der Leitkante 72 vorbeigeführt wird, die der nach oben gekehrten Seite 54 zugeordnet ist, wird vom Rotor 37 herumgetragen und an der nach unten gekehrten Seite des Austragschachts 58 ausgeworfen.

Der Verweis auf den unteren mittleren Totpunkt 74 der Leiteinrichtung 58 bezieht sich hier auf einen generellen Bereich und nicht einen spezifischen Punkt.

## Patentansprüche (Patentansprüche für folgende(n) Vertragsstaat(en): DE, DK, FR, IT)

1. Axialtrennvorrichtung (24) für einen Axialmähdrescher (10), mit einem Rotor (37), der im Erntebetrieb in einer Drehrichtung in Drehung versetzbar ist und einen Auslassabschnitt (41) zum Auslassen von Erntegut aufweist, und mit einer dem Auslassabschnitt (41) zugeordneten Leiteinrichtung (56) zum Führen des vom Rotor (37) ausgelassenen Ernteguts, die eine erste Leitkante (70), die der im Erntebetrieb nach unten drehenden Seite (52) des Rotors (37) benachbart ist, und eine zweite Leitkante (72) aufweist, die der im Erntebetrieb nach oben drehenden Seite (54) des Rotors (37) benachbart ist und unterhalb der Drehachse des Rotors (37) auf die erste Leitkante (70) trifft, wobei die Leiteinrichtung (56) unsymmetrisch ist, sich die erste Leitkante (70) von einem unteren mittleren Totpunkt (74) unterhalb der Drehachse des Rotors (37) über ihre Länge nach außen kontinuierlich weiter nach hinten schließt, und die erste Leitkante (70) eine größere Öffnung bereitstellt als die zweite Leitkante (72), **dadurch gekennzeichnet, dass** sich die zweite Leitkante (72) von dem unteren mittleren Totpunkt (74) unterhalb der Drehachse des Rotors (37) über ihre Länge nach außen kontinuierlich weiter nach hinten schließt, so daß sie in Achsrichtung immer weiter hinten angeordnet ist, je weiter sie vom unteren mittlaren Totpunkt (74) entfernt ist.

2. Axialtrennvorrichtung (24) nach Anspruch 1, **dadurch gekennzeichnet, dass** der Rotor (37) einen Trennabschnitt (40) aufweist, in dem Guteingriffselemente (50) angeordnet sind, die gleichartig mit im Auslassabschnitt (41) angeordneten Guteingriffselementen (50) sind.

3. Axialtrennvorrichtung (24) nach Anspruch 1 oder 2, **dadurch gekennzeichnet, dass** sich die erste Leitkante (70) zumindest über den Hauptteil ihrer Länge langsamer schließt als die zweite Leitkante (72).

4. Axialtrennvorrichtung (24) nach einem der Ansprüche 1 bis 3, **dadurch gekennzeichnet, dass** der Auslassabschnitt (41) unterhalb der Leiteinrichtung (56) mit einem Austragschacht (58) versehen ist.

5. Axialtrennvorrichtung (24) nach Anspruch 4, **dadurch gekennzeichnet, dass** der Austragschacht (58) mit einem sich nach unten neigenden Boden (60), einer der nach unten gekehrten Seite (52) des Rotors (37) zugeordneten Seitenwand (62) und einer der nach oben gekehrten Seite (54) des Rotors (37) zugeordneten Seitenwand (64) ausgestattet ist.

6. Axialtrennvorrichtung (24) nach Anspruch 5, **dadurch gekennzeichnet, dass** die der nach unten gekehrten Seite (52) des Rotors (37) zugeordnete Seitenwand (62) mit einer stromauf angeordneten Platte (66) und einer stromab angeordneten Platte (68) versehen ist.

7. Axialtrennvorrichtung (24) nach Anspruch 6, **dadurch gekennzeichnet, dass** sich die stromauf angeordnete Platte (66) und die stromab angeordnete Platte (68) nach hinten und außen erstrecken, wobei sich die stromab angeordnete Platte (68) weiter nach hinten erstreckt als die stromauf angeordnete Platte (66).

8. Axialtrennvorrichtung (24) nach einem der Ansprüche 1 bis 7, **dadurch gekennzeichnet, dass** die Leiteinrichtung (56) entsprechend dem Radius des Rotors (37) gekrümmt ist.

9. Mähdrescher (10) mit einer Axialtrennvorrichtung (24) nach einem der vorhergehenden Ansprüche.

## Patentansprüche (Patentansprüche für folgende(n) Vertragsstaat(en): GB)

1. Axialtrennvorrichtung (24) für einen Axialmähdrescher (10), mit einem Rotor (37), der im Erntebetrieb in einer Drehrichtung in Drehung versetzbar ist und einen Auslassabschnitt (41) zum Auslassen von Erntegut aufweist, und mit einer dem Auslassabschnitt (41) zugeordneten Leiteinrichtung (56) zum Führen des vom Rotor (37) ausgelassenen Ernteguts, die eine erste Leitkante (70), die der im Erntebetrieb nach unten drehenden Seite (52) des Rotors (37) benachbart ist, und eine zweite Leitkante (72) aufweist, die der im Erntebetrieb nach oben drehenden Seite (54) des Rotors (37) benachbart ist und unterhalb der Drehachse des Rotors (37) auf die erste Leitkante (70) trifft, wobei die Leiteinrichtung (56) unsymmetrisch ist und die erste Leitkante (70) eine größere Öffnung bereitstellt als die zweite Leitkante (72), **dadurch gekennzeichnet, dass** sich die zweite Leitkante (72) von einem unteren mittleren Totpunkt (74) unterhalb der Drehachse des Rotors (37) über ihre Länge nach außen kontinuierlich weiter nach hinten schließt, so daß sie in Achsrichtung immer weiter hinten angeordnet ist, je weiter sie vom unteren mittleren Totpunkt (74) entfernt ist.

2. Axialtrennvorrichtung (24) nach Anspruch 1, **dadurch gekennzeichnet, dass** der Rotor (37) einen Trennabschnitt (40) aufweist, in dem Guteingriffselemente (50) angeordnet sind, die gleichartig mit im Auslassabschnitt (41) angeordneten Guteingriffselementen (50) sind.

3. Axialtrennvorrichtung (24) nach Anspruch 1 oder 2, **dadurch gekennzeichnet, dass** sich die erste Leitkante (70) von einem unteren mittleren Totpunkt (74) unterhalb der Drehachse des Rotors (37) über ihre Länge nach außen kontinuierlich weiter nach hinten schließt.

4. Axialtrennvorrichtung (24) nach einem der Ansprüche 1 bis 3, **dadurch gekennzeichnet, dass** sich die erste Leitkante (70) zumindest über den Hauptteil ihrer Länge langsamer schließt als die zweite Leitkante (72).

5. Axialtrennvorrichtung (24) nach einem der Ansprüche 1 bis 4, **dadurch gekennzeichnet, dass** der Auslassabschnitt (41) unterhalb der Leiteinrichtung (56) mit einem Austragschacht (58) versehen ist.

6. Axialtrennvorrichtung (24) nach Anspruch 5, **dadurch gekennzeichnet, dass** der Austragschacht (58) mit einem sich nach unten neigenden Boden (60), einer der nach unten gekehrten Seite (52) des Rotors (37) zugeordneten Seitenwand (62) und einer der nach oben gekehrten Seite (54) des Rotors (37) zugeordneten Seitenwand (64) ausgestattet ist.

7. Axialtrennvorrichtung (24) nach Anspruch 6, **dadurch gekennzeichnet, dass** die der nach unten gekehrten Seite (52) des Rotors (37) zugeordnete Seitenwand (62) mit einer stromauf angeordneten Platte (66) und einer stromab angeordneten Platte (68) versehen ist.

8. Axialtrennvorrichtung (24) nach Anspruch 7, **dadurch gekennzeichnet, dass** sich die stromauf angeordnete Platte (66) und die stromab angeordnete Platte (68) nach hinten und außen erstrecken, wobei sich die stromab angeordnete Platte (68) weiter nach hinten erstreckt als die stromauf angeordnete Platte (66).

9. Axialtrennvorrichtung (24) nach einem der Ansprüche 1 bis 8, **dadurch gekennzeichnet, dass** die Leiteinrichtung (56) entsprechend dem Radius des Rotors (37) gekrümmt ist.

10. Mähdrescher (10) mit einer Axialtrennvorrichtung (24) nach einem der vorhergehenden Ansprüche.

## Revendications (Revendications pour l'(les) Etat(s) contractant(s) suivant(s): DE, DK, FR, IT)

1. Séparateur à flux axial (24) pour une moissonneuse-batteuse à flux axial (10), comprenant un rotor (37) qui en cours de service peut être entraîné en rotation dans un sens de rotation et qui comporte un tronçon de sortie (41) pour l'évacuation de la récolte, et comprenant un dispositif de guidage (56), qui est associé au tronçon de sortie (41) et est destiné à guider la récolte évacuée par le rotor (37) et qui comporte un premier bord de guidage (70), à proximité du côté (52) du rotor (37), tournant vers le bas en cours de service, et un deuxième bord de guidage (72), qui est situé à proximité du côté (54) du rotor (37), tournant vers le haut en cours de service, et qui entre en contact avec le premier bord de guidage (70) en dessous de l'axe de rotation du rotor (37), le dispositif de guidage (56) n'étant pas symétrique, le premier bord de guidage (70) se fermant en continu vers l'arrière à partir d'un point mort (74) central inférieur en dessous de l'axe de rotation du rotor (37), sur toute sa longueur vers l'extérieur, et le premier bord de guidage (70) fournissant une ouverture plus grande que celle du deuxième bord de guidage (72), **caractérisé en ce que** le deuxième bord de guidage (72) se ferme en continu vers l'arrière à partir d'un point mort (74) central inférieur en dessous de l'axe de rotation du rotor (37), sur toute sa longueur vers l'extérieur, de telle sorte que ledit deuxième bord de guidage est toujours disposé plus à l'arrière dans la direction de l'axe au fur et à mesure qu'il s'écarte du point mort (74) inférieur central.

2. Séparateur à flux axial (24) selon la revendication 1, **caractérisé en ce que** le rotor (37) comporte un tronçon de séparation (40), dans lequel sont agencés des éléments d'accrochage de la récolte (50), qui sont similaires aux éléments d'accrochage de la récolte (50) agencés dans le tronçon de sortie (41).

3. Séparateur à flux axial (24) selon la revendication 1 ou 2, **caractérisé en ce que** le premier bord de guidage (70), au moins sur la majeure partie de sa longueur, se ferme plus lentement que le deuxième bord de guidage (72).

4. Séparateur à flux axial (24) selon l'une quelconque des revendications 1 à 3, **caractérisé en ce que** le tronçon de sortie (41) est muni d'une cuve de déversement (58) en dessous du dispositif de guidage (56).

5. Séparateur à flux axial (24) selon la revendication 4, **caractérisé en ce que** la cuve de déversement (58) est équipée d'un fond (60) incliné vers le bas, d'une paroi latérale (62) associée au côté (52) du rotor (37), dirigé vers le bas, et d'une paroi latérale (64) associée au côté (54) du rotor (37), dirigé vers le haut.

6. Séparateur à flux axial (24) selon la revendication 5, **caractérisé en ce que** la paroi latérale (62) associée au côté (52) du rotor (37), dirigé vers le bas, est munie d'une plaque (66) agencée en amont et d'une plaque (68) agencée en aval du flux.

7. Séparateur à flux axial (24) selon la revendication 6, **caractérisé en ce que** la plaque (66) agencée en amont et la plaque (68) agencée en aval s'étendent vers l'arrière, la plaque (68) agencée en aval s'étendant plus vers l'arrière que la plaque (66) agencée en amont.

8. Séparateur à flux axial (24) selon l'une quelconque des revendications 1 à 7, **caractérisé en ce que** le dispositif de guidage (56) est formé avec une courbure correspondant au rayon du rotor (37).

9. Moissonneuse-batteuse (10) avec un séparateur à flux axial (24) selon l'une quelconque des revendications précédentes.

## Revendications (Revendications pour l'(les) Etat(s) contractant(s) suivant(s): GB)

1. Séparateur à flux axial (24) pour une moissonneuse-batteuse à flux axial (10), comprenant un rotor (37) qui en cours de service peut être entraîné en rotation dans un sens de rotation et qui comporte un tronçon de sortie (41) pour l'évacuation de la récolte, et comprenant un dispositif de guidage (56), qui est associé au tronçon de sortie (41) et est destiné à guider la récolte évacuée par le rotor (37) et qui comporte un premier bord de guidage (70), à proximité du côté (52) du rotor (37), tournant vers le bas en cours de service, et un deuxième bord de guidage (72), qui est situé à proximité du côté (54) du rotor (37), tournant vers le haut en cours de service, et qui entre en contact avec le premier bord de guidage (70) en dessous de l'axe de rotation du rotor (37), le dispositif de guidage (56) n'étant pas symétrique, et le premier bord de guidage (70) fournissant une ouverture plus grande que celle du deuxième bord de guidage (72), **caractérisé en ce que** le deuxième bord de guidage (72) se ferme en continu vers l'arrière à partir d'un point mort (74) central inférieur en dessous de l'axe de rotation du rotor (37), sur toute sa longueur vers l'extérieur, de telle sorte que ledit deuxième bord de guidage est toujours disposé plus à l'arrière dans la direction de l'axe au fur et à mesure qu'il s'écarte du point mort (74) inférieur central.

2. Séparateur à flux axial (24) selon la revendication 1, **caractérisé en ce que** le rotor (37) comporte un tronçon de séparation (40), dans lequel sont agencés des éléments d'accrochage de la récolte (50), qui sont similaires aux éléments d'accrochage de la récolte (50) agencés dans le tronçon de sortie (41 ).

3. Séparateur à flux axial (24) selon la revendication 1 ou 2, **caractérisé en ce que** le premier bord de guidage (70) se ferme en continu vers l'arrière à partir d'un point mort (74) central inférieur, en dessous de l'axe de rotation du rotor (37) sur toute sa longueur vers l'extérieur.

4. Séparateur à flux axial (24) selon l'une des revendications 1 à 3, **caractérisé en ce que** le premier bord de guidage (70), au moins sur la majeure partie de sa longueur, se ferme plus lentement que le deuxième bord de guidage (72).

5. Séparateur à flux axial (24) selon l'une quelconque des revendications 1 à 4, **caractérisé en ce que** le tronçon de sortie (41) est muni d'une cuve de déversement (58) en dessous du dispositif de guidage (56).

6. Séparateur à flux axial (24) selon la revendication 5, **caractérisé en ce que** la cuve de déversement (58) est équipée d'un fond (60) incliné vers le bas, d'une paroi latérale (62) associée au côté (52) du rotor (37), dirigé vers le bas, et d'une paroi latérale (64) associée au côté (54) du rotor (37), dirigé vers le haut.

7. Séparateur à flux axial (24) selon la revendication 6, **caractérisé en ce que** la paroi latérale (62) associée au côté (52) du rotor (37), dirigé vers le bas, est munie d'une plaque (66) agencée en amont et d'une plaque (68) agencée en aval du flux.

8. Séparateur à flux axial (24) selon la revendication 7, **caractérisé en ce que** la plaque (66) agencée en amont et la plaque (68) agencée en aval s'étendent vers l'arrière, la plaque (68) agencée en aval s'étendant plus vers l'arrière que la plaque (66) agencée en amont.

9. Séparateur à flux axial (24) selon l'une quelconque des revendications 1 à 8, **caractérisé en ce que** le dispositif de guidage (56) est formé avec une courbure correspondant au rayon du rotor (37).

10. Moissonneuse-batteuse (10) avec un séparateur à flux axial (24) selon l'une quelconque des revendications précédentes.

## Claims (Claims for the following Contracting State(s): DE, DK, FR, IT)

1. Axial flow separator device (24) for an axial combine harvester (10), having a rotor (37) which can be made to rotate during the harvesting operation in a direction of rotation and has an outlet portion (41) for discharging crops, and having a guiding device (56), which is assigned to the outlet portion (41), for guiding the crop discharged by the rotor (37), said guiding device having a first guiding edge (70), which is adjacent to the side (52) of the rotor (37) which rotates downwardly during the harvesting operation, and a second guiding edge (72), which is adjacent to the side (54) of the rotor (37) which rotates upwardly during the harvesting operation and meets the first guiding edge (70) below the axis of rotation of the rotor (37), the guiding device (56) being asymmetrical, the first guiding edge (70), from a lower central dead centre (74) below the axis of rotation of the rotor (37), closing across its length outwardly continuously further rearwardly, and the first guiding edge (70) providing a larger opening than the second guiding edge (72), **characterised in that** second guiding edge (72), from the lower central dead centre (74) below the axis of rotation of the rotor (37), closes across its length outwardly continuously further rearwardly so that it is always disposed further behind in the axial direction, the further it is at a distance from the lower central dead centre (74).

2. Axial flow separator device (24) according to claim 1, **characterised in that** the rotor (37) has a separator portion (40), in which crop engaging elements (50) are disposed, which elements are of the same type as crop engaging elements (50) disposed in the outlet portion (41).

3. Axial flow separator device (24) according to claim 1 or 2, **characterised in that** the first guiding edge (70) closes at least across the main part of its length more slowly than the second guiding edge (72).

4. Axial flow separator device (24) according to one of the claims 1 to 3, **characterised in that** the outlet portion (41) is provided with a discharge shaft (58) below the guiding device (56).

5. Axial flow separator device (24) according to claim 4, **characterised in that** the discharge shaft (58) is fitted with a downwardly inclined base (60), a side wall (62), which is assigned to the downwardly orientated side (52) of the rotor (37), and a side wall (64) which is assigned to the upwardly orientated side (54) of the rotor (37).

6. Axial flow separator device (24) according to claim 5, **characterised in that** the side wall (62), which is assigned to the downwardly orientated side (52) of the rotor (37), is provided with a plate (66), which is disposed upstream, and a plate (68), which is disposed downstream.

7. Axial flow separator device (24) according to claim 6, **characterised in that** the plate (66), which is disposed upstream, and the plate (68), which is disposed downstream, extend rearwardly and outwardly, the plate (68), which is disposed downstream, extending further rearwardly than the plate (66), which is disposed upstream.

8. Axial flow separator device (24) according to one of the claims 1 to 7, **characterised in that** the guiding device (56) is curved corresponding to the radius of the rotor (37).

9. Combine harvester (10) with an axial flow separator device (24) according to one of the preceding claims.

## Claims (Claims for the following Contracting State(s): GB)

1. Axial flow separator device (24) for an axial combine harvester (10), having a rotor (37) which can be made to rotate during the harvesting operation in a direction of rotation and has an outlet portion (41) for discharging crops, and having a guiding device (56), which is assigned to the outlet portion (41), for guiding the crop discharged by the rotor (37), said guiding device having a first guiding edge (70), which is adjacent to the side (52) of the rotor (37) which rotates downwardly during the harvesting operation, and a second guiding edge (72), which is adjacent to the side (54) of the rotor (37) which rotates upwardly during the harvesting operation and meets the first guiding edge (70) below the axis of rotation of the rotor (37), the guiding device (56) being asymmetrical and the first guiding edge (70) providing a larger opening than the second guiding edge (72), **characterised in that** the second guiding edge (72), from a lower central dead centre (74) below the axis of rotation of the rotor (37), closes across its length outwardly continuously further rearwardly so that it is always disposed further behind in the axial direction, the further it is at a distance from the lower central dead centre (74).

2. Axial flow separator device (24) according to claim 1, **characterised in that** the rotor (37) has a separator portion (40), in which crop engaging elements (50) are disposed, which elements are of the same type as crop engaging elements (50) disposed in the outlet portion (41).

3. Axial flow separator device (24) according to claim 1 or 2, **characterised in that** the first guiding edge (70) closes from a lower central dead centre (74) below the axis of rotation of the rotor (37) across its length outwardly continuously further rearwardly.

4. Axial flow separator device (24) according to one of the claims 1 to 3, **characterised in that** the first guiding edge (70) closes at least across the main part of its length more slowly than the second guiding edge (72).

5. Axial flow separator device (24) according to one of, the claims 1 to 4, **characterised in that** the outlet portion (41) is provided with a discharge shaft (58) below the guiding device (56).

6. Axial flow separator device (24) according to claim 5, **characterised in that** the discharge shaft (58) is fitted with a downwardly inclined base (60), a side wall (62), which is assigned to the downwardly orientated side (52) of the rotor (37), and a side wall (64) which is assigned to the upwardly orientated side (54) of the rotor (37).

7. Axial flow separator device (24) according to claim 6, **characterised in that** the side wall (62), which is assigned to the downwardly orientated side (52) of the rotor (37), is provided with a plate (66), which is disposed upstream, and a plate (68), which is disposed downstream.

8. Axial flow separator device (24) according to claim 7, **characterised in that** the plate (66), which is disposed upstream, and the plate (68), which is disposed downstream, extend rearwardly and outwardly, the plate (68), which is disposed downstream, extending further rearwardly than the plate (66), which is disposed upstream.

9. Axial flow separator device (24) according to one of the claims 1 to 8, **characterised in that** the guiding device (56) is curved corresponding to the radius of the rotor (37).

10. Combine harvester (10) with an axial flow separator device (24) according to one of the preceding claims.
